Europäisches Patentamt

European Patent Office

Office européen des brevets

(19)

(11) Numéro de publication: **0 267 842**
**B1**

(12) **FASCICULE DE BREVET EUROPEEN**

(45) Date de publication du fascicule du brevet: **23.01.91**

(51) Int. Cl.⁵: **F 02 M 21/04**

(21) Numéro de dépôt: **87402414.4**

(22) Date de dépôt: **27.10.87**

(54) **Diffuseur de gaz liquéfié détendu pour l'alimentation de moteurs thermiques.**

(30) Priorité: **30.10.86 FR 8615119**

(43) Date de publication de la demande:
**18.05.88 Bulletin 88/20**

(45) Mention de la délivrance du brevet:
**23.01.91 Bulletin 91/04**

(84) Etats contractants désignés:
**BE DE ES GB IT NL SE**

(56) Documents cités:
**CH-A- 579 216**
**GB-A-1 389 839**
**US-A-2 203 961**
**US-A-3 528 787**
**US-A-4 574 763**

(73) Titulaire: **Olivan, Louis**
**Rue Rameau**
**F-65300 Lannemezan (FR)**
(73) Titulaire: **Souleillan, Bernard**
**Rue Rameau**
**F-65300 Lannemezan (FR)**

(72) Inventeur: **Olivan, Louis**
**Rue Rameau**
**F-65300 Lannemezan (FR)**
Inventeur: **Souleillan, Bernard**
**Rue Rameau**
**F-65300 Lannemezan (FR)**

(74) Mandataire: **Cuer, André**
**CABINET CUER 30, rue de Léningrad**
**F-75008 Paris (FR)**

Courier Press, Leamington Spa, England.

**Description**

La présente invention concerne un diffuseur de gaz liquéfié détendu en phase gazeuse selon le préambule de la revendication 1.

Ce gaz a été détendu pour l'amener en phase gazeuse à une pression voisine de la pression atmosphérique et, dans tout ce qui va suivre, il sera appelé "gaz liquifié détendu". Dans les moteurs thermiques, et, en particulier, dans les moteurs à explosion des véhicules automobiles, un tel gaz est injecté dans de l'air provenant d'un filtre à air pour produire un mélange air/gaz qui alimente le moteur, l'injection ayant lieu dans un diffuseur qui doit donner au mélange une teneur en gaz adéquate.

Un diffuseur du genre spécifié plus haut est connu par le brevet US—A—4.574.763.

D'autre part, le brevet GB—A—1.389.839 décrit un diffuseur de gaz liquéfié détendu en phase gazeuse comprenant un corps dont la partie supérieure comporte une cavité divisée en deux chambres par une membrane élastique présentant en son centre un orifice sur le bord duquel est fixé le bord supérieur d'un cylindre-registre vertical qui coulisse dans un trou borgne et qui commande le débit d'air et de gaz alimentant le moteur, les faces inférieure et supérieure de ladite membrane élastique étant respectivement en communication par des passages avec le conduit d'arrivée d'air et le conduit d'alimentation du moteur, lesdits conduits, perpendiculaires à l'axe dudit trou borgne, étant horizontaux et alignés entre eux et débouchant dans ledit trou borgne de part et d'autre de celui-ci, ledit cylindre-registre étant un piston-registre formé de deux cylindres coaxiaux reliés par un fond annulaire, le cylindre extérieur coulissant dans ledit trou borgne, un ressort compensateur pénétrant dans l'espace compris entre les deux cylindres dudit piston-registre et prenant appui, vers le bas, sur le fond de ce dernier, et, vers le haut, sur la paroi de la chambre supérieure de ladite cavité, et une aiguille de profil prédéterminé, fixée par sa tête sur le fond du corps du diffuseur, s'étendant coaxialement à l'intérieur du piston-registre.

Le diffuseur décrit dans le brevet US—A—2.203.961 comprend un corps dont la partie supérieure comporte une cavité divisée en deux chambres par une membrane élastique présentant en son centre un orifice sur le bord duquel est fixé le bord supérieur d'un cylindre-registre vertical qui coulisse dans un trou borgne et qui commande le débit d'air et de gaz alimentant le moteur, les faces inférieure et supérieure de la membrane élastique spécifiée ci-dessus étant respectivement en communication par des passages avec le conduit d'arrivée d'air et le conduit d'alimentation du moteur.

On comprend que, dans de tels diffuseurs, la différence de pression existant entre l'arrivée d'air et la sortie du diffuseur se traduit par la même différence de pression de part et d'autre du piston ou de la membrane, et par un déplacement du piston ou par une déformation de la membrane qui fixe la hateur de cylindre-registre. Ceci modifie le débit du gaz injecté qu'il est possible d'asservir au débit d'air et aux conditions de fonctionnement du moteur.

Toutefois, de tels diffuseurs présentant de nombreux inconvénients qui sont notamment dûs au fait que la teneur en gaz du mélange air/gaz introduit dans le moteur n'est pas adaptée à certaines conditions de fonctionnement, comme la marche au ralenti ou le démarrage à froid, ce qui se traduit, en particulier, pas des dérives de consommation dans le temps.

Aussi, le but de l'invention est-il de fournir un diffuseur du genre spécifié ci-dessus dans lequel l'injection du gaz dans la collecteur d'admission soit indépendante des phénomènes extérieurs au moteur, tels que les surpressions d'air à l'admission ou les augmentations de la dépression dues à l'encrassement du filtre à air.

Un autre but est de proposer un dispositif qui soit particulièrement bien adapté à la bicarburation, c'est-à-dire aux moteurs fonctionnant aussi bien au gaz qu'à l'essence ou au fuel.

Un but supplémentaire est la conception d'un diffuseur qui soit simple, peu coûteux et de mise en place aisée, et qui évite la nécessité de prévoir des réglages ultérieurs.

Ces buts sont atteints grâce à un diffuseur selon la préambule de la revendication 1 qui comporte les caractéristiques de la partie caractérisante de cette revendication.

L'aigulle de diffuseur selon l'invention, dont la position peut être asservie à un capteur de régulation, rend convenable à toutes les allures la teneur en gaz du mélange alimentant le moteur. En effet, son profil permet de maîtriser les sections de passage disponibles pour le gaz à chaque niveau de la lumière longitudinale découverte par la montée du piston-registre, et de régler la richesse du mélange pour chaque type de moteur.

Dans une forme avantageuse de réalisation, le passage qui met la face supérieur de la membrane élastique du diffuseur selon l'invention en communication avec le conduit d'alimentation du moteur est constitué par deux trous ménagés dans le fond du piston-registre et, de préférence, la partie inférieure de ce fond présente une saignée de faible profondeur qui s'étend entre chaque trou et la paroi extérieure du fond parallèlement à l'axe des conduites d'arrivée d'air et d'alimentation du moteur, ce qui facilite l'amorcage du processus.

De préférence, le corps du diffuseur selon l'invention, au niveau de sa cavité, est réalisé en deux parties qui sont assemblées par des brides entre lesquelles est maintenu le bord de la membrane élastique spécifiée ci-avant, ce qui facilite le montage de cette membrane.

En outre, une paroi du corps du diffuseur peut comporter un passage pour une tige destinée à pousser vers le haut, ou à bloquer en position haute, depuis l'extérieur, le fond du piston-registre selon l'invention, afin notamment de le mettre hors service sans pertes de charge quand on abandonne l'alimentation au gaz. Cette tige peut être bloquée en position haute par une électrovanne, cependant que l'on coupe l'arrivée du gaz et que l'on ouvre l'admission de l'autre carburant au moyen d'électrovannes supplémentaires.

Enfin, le corps de ce diffuseur peut également comporter un passage qui relie entre eux les conduits d'arrivée d'air et d'alimentation du moteur et que peut fermer plus ou moins une vis pointeau vissée depuis l'extérieur, afin de fournir un appoint d'air pour régler la teneur en oxyde de carbone des gaz d'échappement lors des ralentis du moteur.

La description qui va suivre, et qui ne présente aucun caractère limitatif, permettra de bien comprendre comment la présente invention peut être mise en pratique. Elle doit être lue en regard des dessins annexés, parmi lesquels:

La figure 1 représente une vue en coupe longitudinale du diffuseur selon la présente invention; et:

La figure 2 montre une vue en élévation partielle de l'objet de la figure 1 prise selon la ligne II—II de cette figure.

Dans tout ce qui va suivre, et pour simplifier la description, on supposera que la diffuseur de gaz liquéfié détendu selon l'invention sa trouve dans la position montrée sur les figures, ce qui donne tout leur sens à des expressions comme: "horizontal", "inférieur", "droit", etc. Toutfois, il doit être bien entendu que cet appareil pourrait fonctionner dans une autre position.

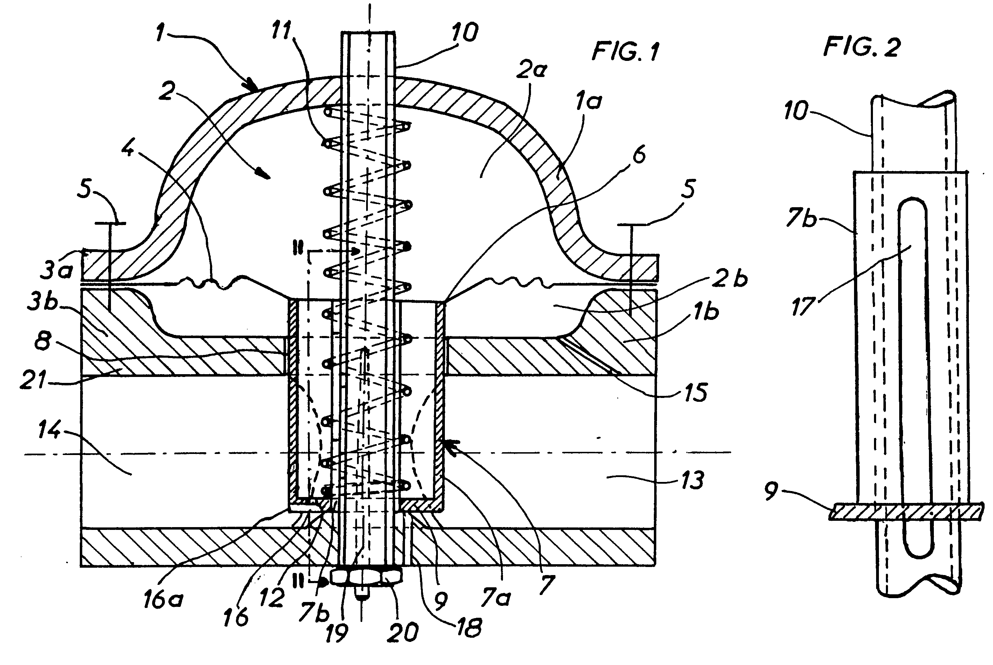

Comme on le voit sur la figure 1, ce diffuseur comprend un corps qui est désigné dans son ensemble par le repère 1 et qui est divisé horizontalement en une partie supérieure 1a en forme de dôme et une partie inférieure 1b de hauteur plus importante, entre lesquelles est ménagée une cavité 2. Les bords 3a et 3b des parties 1a et 1b, respectivement, présentent, présentent la forme de brides et ils enserrent entre eux le bord d'une membrane élastique 4 grâce à des organes de serrage qui ont été représentés très schématiquement en 5. Cette membrane 4 sépare en deux chambres 2a et 2b la cavité 2 et elle comporte un trou central sur le bord 6 duquel est fixé par tout moyen convenable le bord supérieur d'un piston-registre 7 qui s'étend vers le bas à travers un trou borgne vertical 8 ménagé dans la partie inférieure 1b du corps 1.

Le piston-registre 7 est, en fait, un cylindre double: il comprend un cylindre extérieur 7a qui coulisse à frottement deux dans le trou borgne 8 et qui est relié par un fond 9 à un cylindre intérieur 7b coulissant autour d'un tube vertical 10 d'amenée de gaz de liquéfié détendu qui est relié à un détendeur classique. Un ressort compensateur 11 entoure le tube 10 et le cylindre intérieur 7b du piston-registre 7. Il s'appuie vers le bas sur le fond 9 de ce dernier et, vers le haut, sur la paroi de la partie haute 1a du corps 1. Dans sa position basse, le piston-registre 7 repose sur un socle 12 ménagé au fond du trou borgne 8.

La partie inférieure 1b du corps 1 est percée jusqu'au débouché dans le trou 8 de deux conduits en alignement: l'un, 13, à la droite sur la figure, servant à l'arrivée d'air, et l'autre, 14, à gauche sur la figure, conduisant le mélange air/gaz vers le moteur à alimenter. Ces conduits se raccordent aisément par de simples durites au filtre à air pour le premier, et à la carburation à essence ou à fuel pour le second.

S'agissant maintenant de la circulation des divers fluides utilisés, un passage d'équilibrage 15 relie le conduit 13 d'amenée d'air à la chambre basse 2b de la cavité 2, donc au-dessous de la membrane 4, et une prise de dépression relie le conduit 14 allant vers le moteur à l'espace ménagé entre les cylindres 7a et 7b du piston-registre 7 et, donc, à la chambre haute 2a de la cavité 2, au-dessus de la membrane 4. La prise de dépression peut être consitutée par deux trous 16 ménagés dans le fond 9 du piston-registre 7, la partie inférieure de ce fond 9 présentant une saignée 16a de faible profondeur qui s'étend entre chaque trou 16 et la paroi extérieure du fond 9, parallèlement à l'axe des conduits 13 d'arrivée d'air et 14 d'alimentation du moteur.

Enfin, comme on le voit mieux sur la figure 2, le tube 10 d'arrivée de gaz présente un lumière calibrée 17 allongée dans le sens de ses génératrices qui s'étend au niveau du conduit 14 allant vers le moteur en étant dirigé vers ce dernier, donc à gauche sur la figure 1.

D'autre part, une aiguille 19 s'étend dans l'axe du tube 10 d'arrivée de gaz; elle est fixée sur le fond de la partie basse 1b du corps 1 par un boulon extérieur 20 vissé sur un partie filetée qui la termine vers le bas et qui traverse le fond de la partie 1b, et elle présente une portion cylindrique qui se prolonge vers le haut par une partie conique pour se terminer au niveau de la plaque supérieure 21 de la partie basse 1b du corps 1.

Le mode de fonctionnement de ce dispositif est le suivant: quand le moteur est à l'arrêt, le piston-registre 7 est dans sa position basse représentée sur la figure 1, en appui sur le socle 12, sous l'effet de la pesanteur et du ressort compensateur 11. Lors de la mise en marche, la dépression qui se crée dans le conduit 14 d'alimentation du moteur se transmet dans la chambre 2b par le prise 16, et elle soulève la membrane 4 avec le piston-registre 7 sur une hauteur correspondant à la différence entre la pression régnant dans la conduit 14 d'alimentation du moteur, qui est transmise par la prise de dépression 16, et la pression dans le conduit 13 d'arrivée d'air qui est transmise par le passage d'équilibrage 15 et qui est voisine de la pression atmosphérique. Ainsi, la base du piston-registre 7 dégage plus ou moins le passage entre les conduits 13 et 14, en fonction de la différence entre les pressions qui y régnent. Simultanément, le déplacement vers le haut du piston-registre 7 découvre plus ou moins la lumière 17 du tube 10 d'amenée de gaz, au-dessous du fond de ce piston-registre 7, ce qui dégage un passage de section plus ou moins importante permettant au gaz de s'écouler avec un débit plus ou moins élevé vers le conduit 14 d'alimentation du moteur.

Ainsi, la section du passage traversé par le gaz provenant du tube d'amenée 10, et donc le débit du gaz, peut être réglée de manière prédéterminée en fonction de la différence de pression entre les conduits 14 et 13 en choisissant convenablement l'élasticité de la membrane 4 et du ressort compensateur 11, ce qui se fait au moyen d'essais préliminaires simples qui sont à la portée de l'homme de l'art et qui ne seront donc pas décrits ici.

Enfin, l'aiguille calibrée 19, du fait de sa forme conique au niveau du passage du gaz du tube 10 dans la lumière 17, permet d'affiner le réglage du débit de gaz. Sa position est normalement fixée au montage, mais il est possible de l'asservir à une capsule barométrique ou à un autre capteur de régulation. Quand à ses dimensions, elles sont déterminées en fonction de chaque type de moteur, et ce, là aussi, au moyen d'essais préalables.

Il est ainsi possible d'agir sur la proportion de gaz admis aux diverses allures du moteur, et notamment au ralenti et lors du fonctionnement à vide, tout en évitant les phénomènes d'engorgement qui pourraient apparaître lors du démarrage à froid.

On notera encore que la paroi de la partie inférieure 1b du corps 1 du diffuseur selon l'invention peut comporter un passage 18 qui est destiné à être traversé à frottement doux par une tige non représentée permettant de repousseur totalement vers le haut le piston-registre. Cette disposition met ce dernier hors service quand on abandonne l'alimentation au gaz liquéfié détendu pour l'alimentation à l'essence ou au fuel.

Les déplacements de la tige en question peuvent être commandés mécaniquement par un câble sous gaîne qui aboutit à une tirette montée sur le tableau de bord, ou encore automatiquement, soit par un électro-aimant enfonçant la tige lors de la mise en service de l'alimentation au gaz, soit par l'intermédiaire d'une membrane qui reçoit la pression de la pompe à essence ou à fuel lors du passage à un tel type de carburation.

Dans tous les cas, une électrovanne met hors service le circuit d'alimentation en gaz lors du passage au fontionnement à l'essence ou au fuel et une autre électrovanne ouvre l'admission de ce carburant liquide.

D'autre part, la partie inférieure 1b du corps 1 du diffuseur peut comporter un passage de dérivation non représenté qui relie entre eux les conduits 13 d'arrivée d'air et 14 d'alimentation du moteur et dans lequel peut pénétrer plus ou moins une vis pointeau, par exemple horizontale, vissée dans le corps 1 à partir de l'extérieur du diffuseur.

Cette dérivation permet de fournir un appoint d'air pour régler la teneur en oxyde de carbone des gaz d'échappement lors des ralentis du moteur.

## Revendications

1. Diffuseur de gaz liquéfié détendu en phase gazeuse comprenant un corps (1) dont la partie supérieure comporte une cavité divisée en deux chambres par un piston présentant en son centre le bord supérieur d'un cylindre-registre vertical (7) qui coulisse dans un trou borgne (8) et qui commande le débit d'air et de gaz alimentant le moteur, les faces inférieure et supérieure dudit piston étant respectivement en communication par des passages avec le conduit d'arrivée d'air (13) et le conduit d'alimentation du moteur (14), lesdits conduits (13, 14), perpendiculaires à l'axe dudit trou borgne (8), étant horizontaux et alignés entre eux et débouchant dans ledit trou borgne (8) de part et d'autre de celui-ci, ledit cylindre-registre étant un piston-registre (7) formé de deux surfaces coaxiales, la surface extérieure (7a) coulissant dans ledit trou borgne (8), et la surface intérieure (7b) coulissant à frottement doux sur un tube coaxial (10) d'arrivée de gaz liquéfié détendu en phase gazeuse dont la paroi présente une lumière longitudinale unique (17) située dans la zone du conduit (14) d'alimentation du moteur, un ressort compensateur (11) prenant appui, vers le bas, sur le piston-registre (7) et, vers le haut, sur la paroi de la chambre supérieure (2a) de ladite cavité (2), caractérisé par le fait que ledit piston est constitué par une membrane élastique (4) présentant en son centre un orifice sur le bord duquel est fixé par son bord supérieur ledit piston-registre (7), par le fait que ledit piston-registre (7) est formé de deux cylindres coaxiaux (7ab, 7b) reliés par un fond annulaire (9), par le fait que ledit ressort compensateur (11) pénêtre dans l'espace compris entre les deux cylindres (7a, 7b) dudit piston-registre (7) et prend appui, vers le bas, sur le fond (9) de ce dernier, et par le fait qu'une aiguille de profil prédéterminé (19), fixée par sa tête sur le fond du corps (1) du diffuseur, s'étend axialement vers le haut dans ledit tube (10) d'arrivée de gaz liquéfié détendu, et ce, jusqu'à un niveau voisin du haut de la lumière (17) ménagée dans ce tube (10).

2. Diffuseur selon la revendication 1, caractérisé par le fait que la position ladite aiguille (19) est asservie à un capteur de régulation.

3. Diffuseur selon l'une quelconque des revendications 1 et 2, caractérisé par le fait que le passage (16) qui met la face supérieure de ladite membrane élastique (4) en communication avec le conduit (14) d'alimentation du moteur est constitué par deux trous ménagés dans le fond (9) dudit piston-registre (7).

4. Diffuseur selon la revendication 3, caractérisé par le fait que la partie inférieure dudit fond (9) présente une saignée (16a) de faible profondeur qui s'étend entre chaque trou (16) et la paroi extérieure du fond (9) parallèlement à l'axe des conduites (13) d'arrivée d'air et (14) d'alimentation du moteur.

5. Diffuseur selon l'une quelconque des revendications 1 à 4, caractérisé par le fait que son corps (1), au niveau de ladite cavité (2), est réalisé en deux parties (1a, 1b) qui sont assemblées par des brides (3a, 3b) entre lesquelles est maintenu le bord de ladite membrane élastique (4).

6. Diffuseur selon l'une quelconque des revendications 1 à 5, caractérisé par le fait qu'une paroi de son corps (1) comporte un passage (18) pour une tige destinée à pousser vers le haut, ou à bloquer en position haute, depuis l'extérieur, le fond (9) dudit piston-registres (7).

7. Diffuseur selon la revendication 6, caractérisé par le fait que, pour le passage à un autre carburant, il est associé à une électrovanne bloquant ladite tige en position haute, à une électrovanne coupant l'arrivée du gaz liquéfié détendu, et/ou à une électrovanne ouvrant l'admission de l'autre carburant.

8. Diffuseur selon l'une quelconque des revendications 1 à 7, caractérisé par le fait qui son corps (1) comporte un passage qui relie entre eux les conduits (13) d'arrivée d'air et (14) d'alimentation du moteur et que peut fermer plus ou moins une vis pointeau vissée depuis l'extérieur du corps (1) du diffuseur.

**Patentansprüche**

1. Diffusor für in die Gasphase entspanntes Flüssiggas, mit einem Körper (1), dessen oberer Teil einen durch einen Kolben in zwei Kammern geteilten Hohlraum aufweist, wobei der Kolben in der Mitte den oberen Rand eines senkrechten Zylinderregisters (7) aufweist, das in einem Blindloch (8) verschiebbar ist und das die Zufuhr der Luft und des Gases an den Motor regelt, wobei die untere und die obere Fläche des Kolbens über Leitungen in Verbindung mit der Luftzufuhrleitung (13) bzw. mit der Versorgungsleitung des Motors (14) steht, wobei die Leitungen (13 und 14), die senkrecht zur Achse des Blindlochs (8) horizontal und aufeinander ausgerichtet liegen in das Blindloch (8) an beiden Seiten einmünden, wobei das Zylinderregister ein mit zwei koaxialen Flächen ausgebildetes Kolbenregister (7) ist, wobei die äußere Fläche (7a) in dem Blindloch (8) und die innere Fläche (7b) mit geringer Reibung auf einem der Zufuhr von in die Gasphase entspanntem Flüssiggas dienenden koaxialen Rohr (10) gleitet, dessen Wandung einen Längseinlaß (17) aufweist, der im Bereich der Motorversorgungsleitung (14) angeordnet ist, wobei eine Ausgleichsfeder (11) sich unten am Kolbenregister (7) und oben an der Wandung der oberen Kammer (2a) des Hohlraumes (2) abstützt, dadurch gekennzeichnet, daß der Kolben als elastische Membran (4) ausgebildet ist, am Rand deren mittiger Öffnung mittels des oberen Randes das Kolbenregister (7) befestigt ist, daß das Kolbenregister (7) als zwei koaxiale Zylinder (7a und 7b) ausgebildet ist, die durch einen ringförmigen Boden (9) miteinander verbunden sind, daß die genannte Ausgleichsfeder (11) sich in den zwischen den zwei Zylindern (7a und 7b) des Kolbenregisters (7) vorhandenen Raum erstreckt und sich unten am Boden (9) von letzteren abstützt und daß eine Nadel mit vorbestimmten Profil (19), die mit ihrem Kopf am Boden des Körpers des Diffusors (1) befestigt ist, sich in axialer Richtung nach oben in dem Rohr (10) zur Zufuhr des entspannten Flüssiggases erstreckt, und zwar bis auf eine Höhe im Bereich des oberen Teils des in diesem Rohr (10) vorgesehenen Einlasses (17).

2. Diffusor nach Anspruch 1, dadurch gekennzeichnet, daß die Stellung der Nadel (19) durch einen der Regelung dienenden Geber erfaßt wird.

3. Diffusor nach einem der Ansprüche 1 und 2, dadurch gekennzeichnet, daß der Durchgang (16), der die obere Fläche der elastische Membran (4) mit der Motorvorgungsleitung (14) in Verbindung setzt, als zwei im Boden (9) des Kolbenregisters (7) angeordnete Löcher ausgebildet ist.

4. Diffusor nach Anspruch 3, dadurch gekennzeichnet, daß der untere Teil des Bodens (9) eine Nut (16a) geringer Teife aufweist, die sich parallel zur Achse der Leitungen (13) für die Luftzufuhr (13) und die Versorgung des Motors zwischen jedem Loch (16) und der äußeren Wandung des Bodens (9) erstreckt.

5. Diffusor nach einem der Ansprüche 1 bis 4, dadurch gekennzeichnet, daß auf der Höhe des Hohlraumes (2) sein Körper (1) als zwei Teil (1a, und 1b) ausgebildet ist, die durch Stege (3a und 3b) miteinander verbunden sind, zwischen denen der Rand der elastischen Membran (4) gehalten ist.

6. Diffusor nach einem der Ansprüche 1 bis 5, dadurch gekennzeichnet, daß ein Wandung seines Körpers (1) einen Durchgang (18) für eine Stange aufweist, die den Boden (9) des Kolbenregisters (7) nach oben verschieben oder in oberer, nach außen gerichteter Stellung halten soll.

7. Diffusorr nach Anspruch 6, dadurch gekennzeichnet, daß zwecks Kraftstoffwechsel er mit einem die Stange in oberer Stellung arretierenden, mit einem die Zufuhr des entspannten Flüssigases verbindernden und/oder die Zufuhr des anderen Kraftstoffes ermöglichenden Magnetventiles ausgestattet ist.

8. Diffusor nach einem der Ansprüche 1 bis 7, dadurch gekennzeichnet, daß sein körper (1) einen Durchgang aufweist, der die Luftzufuhrleitung (13) und die Motorversorgungsleitung (14) miteinander verbindet, wobei der Durchgang mehr oder weniger durch eine spitze Schraube geschlossen werden kann, die von der Außenseite des Körpers (1) betätigt werden kann.

**Claims**

1. Diffuser for liquefied gas expanded in gaseous phase of type comprising: a body (1) of which the upper part has a cavity divided in two chambers by a ram having in its middle part the upper edge of a vertical register-cylinder (7) which slides in a blind hole (8) and which control the delivery of air and gas feeding the engine, the lower and upper faces of the said ram being respectively in communication by passages with the air intake duct (13) and the feed duct of the engine (14), the said ducts (13, 14) perpendicular to the axis of the said blind hole (8) being horizontal and into alignment between them and issuing in the said blind hole (8) on both sides of this hole, the said register-cylinder being a register piston (7) constituted by two co-axial surfaces, the outer surface (7a) sliding in the said blind hole (8) and the inner surface (7b) sliding with gentle friction on a coaxial intake tube (10) of liquified gas expanded in the gaseous phase on which the wall has a single longitudinal hole (17) located in the zone of the feed duct (14) of the engine, a compensating spring (11) leaning downward on the register-piston (7) and upward on the wall of the upper chamber (2a) of the said cavity (2), characterized by the fact that the said piston is constituted by an elastic membrane (4) having in its centre a hole on the edge of which is maintained by its upper edge the said register-piston (7), by the fact that the said register-piston (7) is constituted by two coaxial cylinders (7a, 7b) connected by an annular bottom (9), by the fact that the said compensating spring (11) enters into the space comprised between the two cylinders (7a, 7b) of the said register-piston (7) and leans downward on the bottom (9) of this piston and by the fact that a needle (10) of predetermined profile, fastened by its head to the bottom of the body (1) of the diffuser, extends axially upward in the expanded liquified gas intake tube (10) and this up to a near top of the hole (17) made in this tube (10).

2. Diffuser according to claim 1, wherein the position of said needle (19) is dependent upon an adjustment sensor.

3. Diffuser according to any one of the claims 1 and 2, wherein the way (16) which puts the upper face of said elastic membrane (4) in communication with the engine feed duct (14) is consisting of two holes made into the bottom (9) of the said register-piston (7).

4. Diffuser according to claim 3, wherein the lower part of the said bottom (9) has a shallow recess (16a) therein extending between each way (16) and the outside wall of the bottom (9) in a parallel direction to the axis of the air intake duct (13) and the engine feed duct (14).

5. Diffuser according to any one of the claims 1 to 4, wherein its body (1) at the level of said cavity (2) is made in two parts (1a, 1b) which are assembled by flanges (3a, 3b) between them is held the edge of the said elastic membrane (4).

6. Diffuser according to any one of the claims 1 to 5, wherein one wall of the body (1) comprises a passage (18) for a rod adapted to upwards push or to lock in high position, from outside, the bottom (9) of said register-piston (7).

7. Diffuser according to claim 6, wherein for the change to another fuel, it is combined with an electrovalve locking said rod in high position, with an electrovalve cutting off the intake of expanded liquified gas and/or to an electrovalve opening the intake of the another fuel.

8. Diffuser according to any one of the claims 1 to 7, wherein its body (1) comprises a passage which connects the air intake duct (13) and the engine feed duct (14) together, said passage being able to be closed by a needle screw from the outside of the body (1) of the diffuser.

FIG.1

FIG.2

EP 0 267 842 B1